(19) Europäisches Patentamt
European Patent Office
Office européen des brevets

(11) **EP 4 760 913 A1**

(12) **EUROPEAN PATENT APPLICATION**

(43) Date of publication:
**17.06.2026   Bulletin 2026/25**

(21) Application number: **25213808.6**

(22) Date of filing: **05.11.2025**

(51) International Patent Classification (IPC):
*H01M 50/209* (2021.01)    *H01M 50/242* (2021.01)
*H01M 50/136* (2021.01)    *H01M 50/103* (2021.01)
*H01M 50/131* (2021.01)    *H01M 50/291* (2021.01)

(52) Cooperative Patent Classification (CPC):
**H01M 50/103; H01M 50/131; H01M 50/209;
H01M 50/242; H01M 50/291;** Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **07.11.2024   KR 20240156912**

(71) Applicant: **SAMSUNG SDI CO., LTD.
Yongin-si, Gyeonggi-do 17084 (KR)**

(72) Inventor: **GIL, Hyo Geun
Suwon-si, Gyeonggi-do 16678 (KR)**

(74) Representative: **Gulde & Partner
Patent- und Rechtsanwaltskanzlei mbB
Berliner Freiheit 2
10785 Berlin (DE)**

(54)   **BATTERY MODULE**

(57)   A battery module includes battery cells, a housing in which the battery cells are accommodated in a row, a connector electrically connected to the battery cells, and a fracture prevention part on the battery cell and protruding from the battery cell to prevent fatigue failure due to a swelling phenomenon.

FIG.1

EP 4 760 913 A1

**Description**

Aspects of embodiments of the present disclosure relate to a battery module.

**RELATED ART**

In general, as demand for portable electronic products, such as laptops, video cameras, and portable phones, increases rapidly and commercialization of robots, electric vehicles, and the like begins in earnest, research on high-performance secondary batteries capable of repeated charging and discharging is being actively conducted.

Secondary batteries are widely used for powering or storing energy in not only small devices, such as portable electronic devices, but also medium-to-large devices, such as electric vehicles and energy storage systems (ESSs). In particular, in the case of the medium-to-large devices, one battery module may be configured in a form in which multiple battery cells are electrically connected to each other to improve the output and capacity of the battery.

A conventional battery module maintains durability by applying a certain level of surface pressure to the battery cell through a housing structure installed to surround the battery cell. However, in such a structure, when a swelling phenomenon in which a battery cell expands due to fast charging, overcharging, overdischarging, short-circuiting, or high temperature storage occurs, the pressure acting between the battery cell and the housing may be continuously increased to accelerate degradation of the battery cell.

The above-described information disclosed in the background technology of the present disclosure is provided for improving understanding of the background of the present disclosure, and may include information that does not constitute the related art.

**SUMMARY**

According to an aspect of embodiments of the present invention, a battery module for extending the life of a product and preventing (preventing or substantially preventing) safety accidents by preventing (preventing or substantially preventing) damage to battery cells caused by deformation due to a swelling phenomenon is provided.

However, aspects and technical problems to be solved by the present disclosure are not limited to the above-described aspects and problems to be solved, and other aspects and problems to be solved which are not mentioned, will be clearly understood by those skilled in the art from the description of the invention disclosed below.

According to one or more embodiments of the present invention, a battery module includes: battery cells; a housing in which the battery cells are accommodated in a row; a connector electrically connected to the battery cells; and a fracture prevention part on the battery cell and protruding from the battery cell to prevent fatigue failure due to a swelling phenomenon.

The battery cell may include: a case having an open upper side and in which one or more electrode assemblies including a positive electrode and a negative electrode are accommodated; a cap cover covering an open area of the case; and a terminal assembled to the cap cover, connected to the electrode assembly, and connected to the connector.

The case may include: a rectangular lower surface; a pair of long side surfaces extending upward from long sides of the lower surface to face each other; and a pair of short side surfaces extending upward from short sides of the lower surface to face each other and connected to the pair of long side surfaces.

The fracture prevention part may be at an upper portion of the case.

The fracture prevention part may protrude toward the housing.

A protruding length of the fracture prevention part may increase from a central portion of the housing to an edge of the housing.

The protruding length of the fracture prevention part may be smaller than a length by which the case is deformable due to a swelling phenomenon.

The battery module may further include a spacer between the battery cells and maintaining a gap between the battery cells.

The spacer may be between a pair of neighboring battery cells among the battery cells accommodated in a row.

The spacer may include a cap seating portion seated on an upper side of the battery cell and a cap insertion portion extending from the cap seating portion and inserted between the neighboring battery cells.

A width of the cap insertion portion may be proportional to a deformable length of the battery cell.

The spacer may be integrally formed and arranged between the neighboring battery cells.

The spacer may include: cap seating portions seated on upper sides of the battery cells; a cap insertion portion extending from the cap seating portion and inserted between the neighboring battery cells; and a cap connection portion connecting the cap seating portions.

The spacer may be connected to the connector.

The spacer may include: a cap seating portion seated on an upper side of the battery cell; a cap insertion portion extending from the cap seating portion and inserted between the neighboring battery cells; and a cap extension portion extending from the cap seating portion and connected to the connector.

The cap extension portion may be movable along a guide hole of the connector.

The spacer may be integrally connected to the connector.

The spacer may include: cap seating portions seated on upper sides of the battery cells; a cap insertion portion extending from the cap seating portion and inserted between the neighboring battery cells; a cap connection portion connecting the cap seating portions; and a cap extension portion extending from the cap seating portion and connected to the connector.

The spacer may include a resin material.

The spacer may include an elastic material, thus enabling the absorption of mechanical forces.

According to another aspect of embodiments of the present disclosure, a battery module having an improved structure and a vehicle including the battery module are provided. According to one or more embodiments, the battery module includes: battery cells; a housing in which the battery cells are accommodated in a row; a connector electrically connected to the battery cells; and a fracture prevention part formed on the battery cell and protruding from the battery cell to prevent (prevent or substantially prevent) fatigue failure due to a swelling phenomenon.

## BRIEF DESCRIPTION OF THE DRAWINGS

The following drawings included with this specification illustrate some embodiments of the present invention and, together with the detailed description of the invention to be described below, are provided to facilitate understanding of the technical idea of the present invention; however, the present invention is not to be construed as being limited to matters described in such drawings, in which:

FIG. 1 is an exploded perspective view schematically showing a battery module according to an embodiment of the present invention;

FIG. 2 is a perspective view schematically showing a battery cell according to an embodiment of the present invention;

FIG. 3 is a cross-sectional view schematically showing the battery cell of FIG. 2;

FIG. 4 is a view schematically showing a state in which a battery cell not provided with a fracture prevention part according to an embodiment of the present invention is disposed in a battery module;

FIG. 5 is a view schematically showing a state in which the battery cell of FIG. 4 is deformed by a swelling phenomenon;

FIG. 6 is a view schematically showing a state in which a battery cell provided with a fracture prevention part according to an embodiment of the present invention is disposed in a battery module;

FIG. 7 is a view schematically showing a state in which the battery cell of FIG. 6 is deformed by a swelling phenomenon;

FIG. 8 is a view schematically illustrating a deformation process of a case in which a fracture prevention part is formed according to an embodiment of the present invention;

FIG. 9 is a perspective view schematically showing a spacer according to an embodiment of the present invention;

FIG. 10 is a view schematically illustrating a state in which the spacer of FIG. 9 is mounted between battery cells;

FIG. 11 is a perspective view schematically showing a spacer according to another embodiment of the present invention;

FIG. 12 is a view schematically illustrating a state in which the spacer of FIG. 11 is mounted between battery cells;

FIG. 13 is a perspective view schematically showing a spacer according to another embodiment of the present invention;

FIG. 14 is a view schematically illustrating a state in which the spacer of FIG. 13 is mounted between battery cells;

FIG. 15 is a perspective view schematically showing a spacer according to another embodiment of the present invention;

FIG. 16 is a view schematically illustrating a state in which the spacer of FIG. 15 is mounted between battery cells;

FIG. 17 is a graph schematically showing stress according to whether the fracture prevention part and the spacer according to an embodiment of the present invention are applied; and

FIG. 18 is a graph schematically showing an expected life according to whether the fracture prevention part and the spacer according to an embodiment of the present invention are applied.

## DETAILED DESCRIPTION

Herein, some embodiments of the present disclosure will be described in further detail with reference to the accompanying drawings. The terms or words used in the present specification and claims are not to be limitedly interpreted as having general or dictionary meanings and are to be interpreted as having meanings and concepts that are consistent with the technical idea of the present disclosure on the basis of the principle that an inventor can be his/her own lexicographer to appropriately define concepts of terms to describe his/her invention in the best way. Accordingly, since the embodiments disclosed in the present specification and configurations shown in the drawings are only some example embodiments of the present disclosure and do not necessarily represent the entire technical scope of the present disclosure, it is to be understood that there may be various modifications at the time of filing the present application. Further, when used in the present specification, "comprise" or "include" and/or "comprising" or "including" specify the presence of mentioned shapes, numbers, steps, operations, members, elements, and/or groups thereof, and do not exclude the presence or addition of one or more other shapes, numbers, steps, operations, members, elements, and/or groups thereof. Further, when the embodiments of the present disclosure are described, "may do" and/or "may be" may include "one or more embodiments of the present disclosure."

Further, to facilitate understanding of the present disclosure, the accompanying drawings may not be drawn to actual scale and the sizes of some components may be exaggerated. In addition, the same reference numerals may be given to the same components in different embodiments.

The mention that two objects to be compared are "the same" means that the two objects are the same or substantially the same. Accordingly, "the same" or "substantially the same" may include a deviation considered as a low level in the art, for example, a deviation within 5%. Further, uniformity of a parameter in a certain region may mean uniformity from an average point of view.

Although "first," "second," and the like may be used to describe various components, it is to be understood that these components are not limited by these terms. These terms are used to distinguish one component from another component, and unless otherwise stated, it is to be understood that the first component may be the second component.

Throughout the specification, unless otherwise stated, each component may be singular or plural.

The placement of an arbitrary component on the "upper portion (or lower portion)" of a component or "above (or below)" of a component may mean not only that the arbitrary component is disposed in contact with an upper surface (or a lower surface) of the component, but also that another component may be interposed between the component and the arbitrary component disposed above (or below) the component.

Further, when it is disclosed that a certain component is "connected," "coupled," or "linked" to another component, it is to be understood that the components may be directly connected or linked to each other, but also that another component may be "interposed" between the components, or the components may be "connected," "coupled," or "linked" through another component. In addition, when a first component is described as being "electrically coupled to" a second component, this includes not only a case in which the first component is "directly coupled" to the second component, but also a case in which the first component is "coupled" to the second component with a third component interposed therebetween.

Throughout the specification, "A and/or B" means to A, B, or A and B unless otherwise stated. That is, "and/or" includes all combinations or any combination of a plurality of listed items. When referring to "C to D," this means C or more and D or less unless otherwise specified.

When phrases such as "at least one of A, B, and C," "at least one of A, B, or C," "at least one selected from group A, B, and C," or "at least one selected from A, B, and C" are used to specify a list of elements A, B, and C, the phrases may refer to any one of all suitable combinations.

The term "use" may be considered to be synonymous with the term "utilize." As used in the present specification, the terms "substantially," "about," and other similar terms are used as terms of approximation rather than terms of degrees, and are intended to consider an inherent variation in measured or calculated values to be recognized by those skilled in the art.

Although the terms "first," "second," "third," and the like may be used in the present specification to describe various elements, components, regions, layers, and/or sections, these elements, components, regions, layers, and/or sections are not to be limited by these terms. These terms are used to distinguish one element, component, region, drawing layer, or section from another element, component, region, drawing layer, or section. Accordingly, a first element, component, region, layer, or section to be described below may be referred to a second element, component, region, layer, or section without departing from the teachings of the present disclosure.

Spatially related terms such as "beneath," "below," "lower," "above," and "upper" are used for easy description of the relationship of one element or feature to another element or feature shown in the drawings. These spatially related terms are provided for understanding of the present disclosure according to various process states or usage states of the present disclosure, and are not intended to limit the present disclosure. For example, when the elements or features in the drawings are reversed, an element described as "lower" or "below" "becomes "upper" or "above." Accordingly, "below" is a concept encompassing "above" or "below."

The terms used in the present specification are intended to describe the embodiments of the present disclosure, and are not intended to limit the present disclosure.

Herein, in describing the present invention with reference to various embodiments, overlapping descriptions of the same or corresponding components throughout a plurality of embodiments may be omitted. For example, when a configuration that is the same as or corresponding to the configuration disclosed in an embodiment is disclosed in another embodiment, the corresponding configuration may be omitted from the description of the other embodiment, and a configuration that has differences compared to the embodiment may be mainly described.

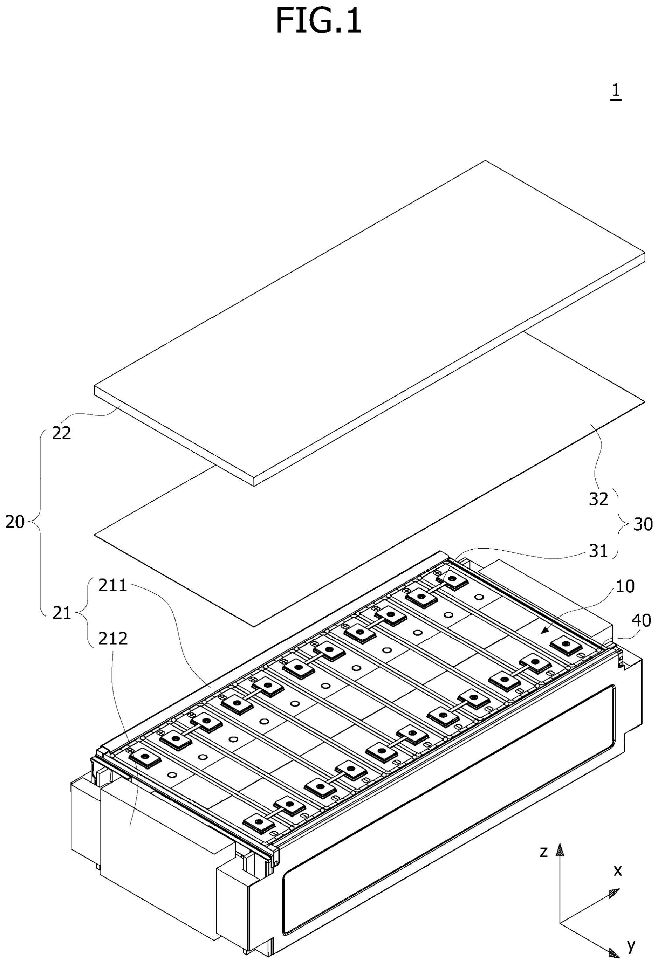

FIG. 1 is an exploded perspective view schematically showing a battery module according to an embodiment of the present invention. Referring to FIG. 1, a battery module 1 according to an embodiment of the present invention includes a battery cell 10, a housing 20, a connector 30, and a fracture prevention part 40.

The battery cell 10 may function as a unit structure which stores and supplies power in the battery module 1. In an embodiment, the battery cell 10 may have an angled, or prismatic, hexahedral shape, but is generally not limited to a specific shape.

The housing 20 may provide a space (i.e., a certain volume) for accommodating the battery cells 10 in a row. The housing 20 may include a housing body 21 having an open upper side and a housing cover 22 covering the housing body 21. The housing body 21 may include a first body wall 211 covering the battery cells 10 arranged in a row in an x-axis direction and a second body wall 212 connecting a pair of first body walls 211 and disposed to face the battery cells 10.

The connector 30 may be electrically connected to the battery cells 10. The connector 30 may include a bus bar 31 electrically connecting each battery cell 10 and a substrate 32 connected to the bus bar 31 to control the battery cell 10. The bus bar 31 may be alternately connected to neighboring battery cells 10.

The fracture prevention part 40 may be formed on the battery cell 10, and may protrude from the battery cell 10 to prevent or substantially prevent fatigue failure of the battery cell 10 due to a swelling phenomenon. The fracture prevention part 40 may be formed on an upper portion of the battery cell 10 and may protrude in a direction of the second body wall 212 of the housing 20. If the battery cell 10 swells and deforms due to the swelling phenomenon, the fracture prevention part 40 may be deformed in a direction opposite to an initially formed protrusion direction to efficiently alleviate fatigue failure of the battery cell 10.

The housing 20 may form a general appearance of the battery module 1 and may support (e.g., entirely support) the battery cell 10.

The housing body 21 may be formed to have a shape of a box with an empty interior and an open side. The open side of the housing body 21 may be disposed to face upward. However, a cross-sectional shape of the housing body 21 is not limited to the quadrangular shape shown in FIG. 1, and may have any of various shapes, such as any of a polygonal shape, a circular shape, an oval shape, and the like.

The housing cover 22 may be coupled to the housing body 21 and close the inner space of the housing body 21. For example, the housing cover 22 may be formed to have a generally plate shape and may be disposed to face an open upper surface of the housing body 21. The housing cover 22 may be fixed to the housing body 21 by any of various types of coupling methods, such as any of bolting, welding, fitting, and the like.

The battery cell 10 may be disposed inside the housing 20. Both, or opposite, end portions of the battery cell 10 may be disposed inside the housing body 21 to face the bottom surface of the housing body 21 and the housing cover 22, respectively.

A plurality of battery cells 10 may be provided. The plurality of battery cells 10 may be arranged in at least one row in the housing body 21 along a longitudinal direction and a width direction of the housing body 21. The plurality of battery cells 10 10 may be connected by bus bars 31 in series or parallel.

The battery module 1 may further include a battery management system (BMS) for managing the plurality of battery cells 10. In an embodiment, the battery management system may include a detection device, a balancing device, and a control device, and may be provided on the substrate 32.

The detection device may detect a state (e.g., a voltage, a current, a temperature, and the like) of the battery cell 10 and obtain state information indicating the state of the battery cell 10. The detection device may detect the voltage of each battery cell 10 constituting the battery module 1. The detection device may also detect the current of each battery cell 10 constituting the battery module 1. The detection device may detect the temperature of the battery cell 10 or an ambient temperature at one or more points of the battery module 1.

The balancing device may perform a balancing operation of the battery cells 10 constituting the battery module 1.

The control device may receive state information (e.g., a voltage, a current, a temperature, and the like) of the battery cell 10 from the detection device. The control device may monitor and calculate the state (e.g., a voltage, a current, a temperature, a state of charge (SOC), a state of health (SOH), and the like) of the battery cell 10 based on the state information received from the detection device. Further, the control device may perform control functions (for example, temperature control, balancing control, charging/discharging control, and the like) and protection functions (for example, over-discharge prevention, over-charge prevention, over-current prevention, short circuit prevention, a fire extinguishing function, and the like) based on the state monitoring results. In addition, the control device may perform a wired or wireless communication function with an external device of a battery pack (for example, an upper controller, a vehicle, a charger, a power conversion system (PCS), or the like). The control device may control the charging/discharging operation and protection operation of the battery.

The detection device, the balancing device, and the control device may include a processor and a memory. The processor may be implemented as a central processing unit (CPU) or a system on chip (SoC), may control a plurality of hardware or software components connected to the processor by driving an operating system or an application, and may perform various types of data processing and calculations. The processor may be configured to execute at least one instruction stored in the memory and store execution result data in the memory.

At least one instruction executed by the processor may be stored in the memory. The memory may be implemented as a volatile storage medium and/or a non-volatile storage medium, and, for example, may be implemented as a read only memory (ROM) and/or a random access memory (RAM).

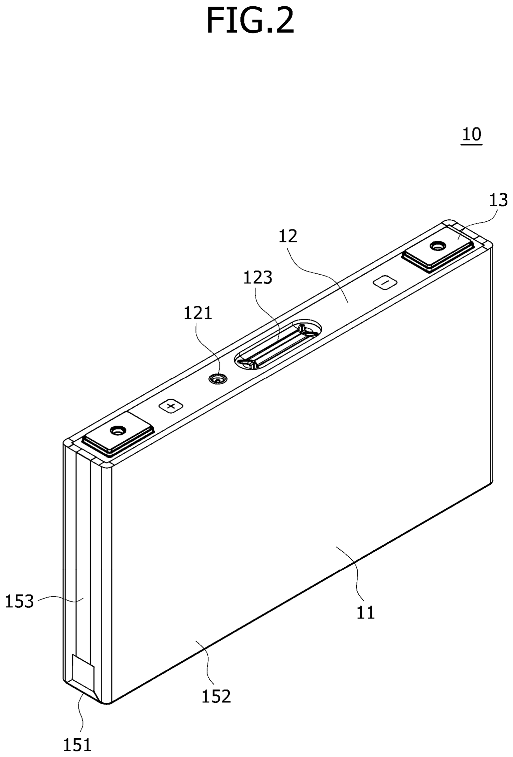

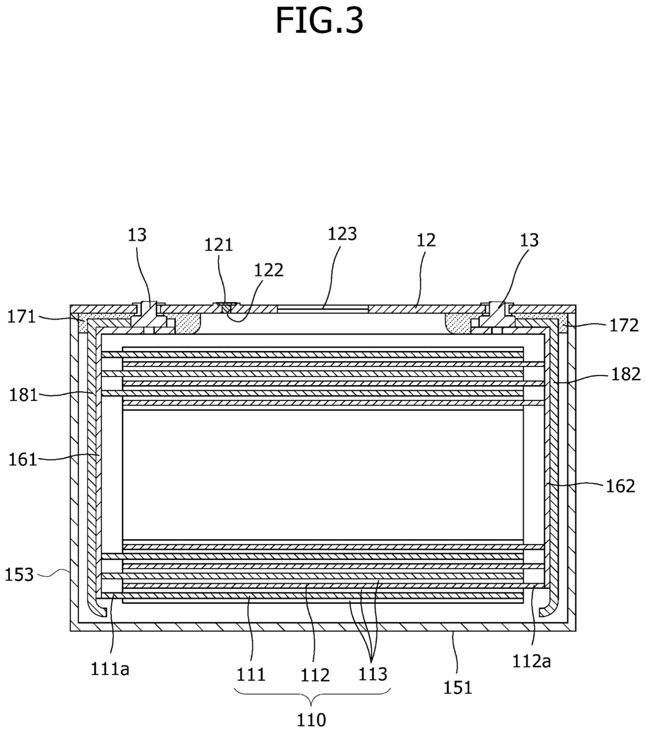

FIG. 2 is a perspective view schematically showing a battery cell according to an embodiment of the present invention; and FIG. 3 is a cross-sectional view schematically showing the battery cell of FIG. 2. Referring to FIGS. 2 and 3, the battery cell 10 according to an embodiment of the present invention may include a case 11, a cap cover 12, and a terminal 13.

The case 11 may have at least one electrode assembly 110 in which a separator 113, which is an insulator, is interposed between a positive electrode 111 and a negative electrode 112 and wound, and may have an open upper side.

Herein, an example in which the battery cell 10 is a prismatic lithium-ion secondary battery will be described. However, the present disclosure is not limited thereto, and the battery cell 10 may be a lithium polymer battery or a cylindrical battery, for example.

The positive electrode 111 and the negative electrode 112 may include coated portions which are regions where an active material is applied to a current collector formed of thin plate-shaped metal foil, and uncoated portions 111a and 112a which are regions where the active material is not coated.

In an embodiment, the positive electrode 111 and the negative electrode 112 may be wound after interposing the separator 113, which is an insulator, therebetween. However, the present disclosure is not limited thereto, and, in an embodiment, the electrode assembly 110 may be formed in a structure in which a plurality of sheets of positive electrodes 111 and negative electrodes 112 are alternately stacked with the separator 113 therebetween.

The case 11 may generally form an overall appearance of the battery cell 10 and may be formed of a conductive metal, such as aluminum, an aluminum alloy, or nickel-plated steel. Further, the case 11 may provide a space (i.e., a volume) in which the electrode assembly 110 is accommodated.

In an embodiment, the case 11 may include a rectangular lower surface 151, a pair of facing long side surfaces 152 extending upward from long sides of the lower surface 151, and a pair of facing short side surfaces 153 extending upward from short sides of the lower surface 151. The long side surfaces 152 and the short side surfaces 153 may be connected to each other. The lower surface 151, the long side surfaces 152, and the short side surfaces 153 may be connected in a state of being joined to each other by welding.

A cap cover 12 may cover the open area of the case 11. The cap cover 12 and the case 11 may be made of a conductive material such as a metal.

The terminal 13 may be assembled to the cap cover 12 and connected to the electrode assembly 110. The terminal 13 may be connected to the connector 30. The terminal 13 electrically connected to the positive electrode 111 or the negative electrode 112 may be installed to protrude outward through the cap cover 12. In an embodiment, a pair of terminals 13 protruding outward from the cap cover 12 may be formed. The pair of terminals 13 may be connected to the positive electrode 111 and the negative electrode 112, respectively, and may function as a positive electrode terminal and a negative electrode terminal of the battery cell 10. In an embodiment, the terminals 13 may be electrically connected to current collectors including a first current collector 161 and a second current collector 162 (herein, referred to as positive electrode and negative electrode current collectors) that are joined to a positive electrode uncoated portion 111a and a negative electrode uncoated portion 112a by welding. For example, the pair of terminals 13 may be respectively joined to the positive electrode and negative electrode current collectors 161 and 162 by welding. However, the present disclosure is not limited thereto, and, in an embodiment, the terminals 13 and the positive electrode and negative electrode current collectors 161 and 162 may be integrally formed. In an embodiment, an outer surface of an upper pillar of the terminal 13 may be threaded, and may be fixed to the cap cover 12 with a nut.

However, the present invention is not limited thereto, and, in an embodiment, the terminal 13 may be formed with a rivet structure and riveted to the cap cover 12, or may be welded or latched to the cap cover 12.

In an embodiment, the cap cover 12 may be formed of a thin plate and may be coupled to the opening of the case 11, and in the cap cover 12, an electrolyte inlet 122 in which a sealing stopper 121 may be installed may be formed and a vent 123 may be arranged or installed.

The vent 123 may be opened and closed in response to changes in internal pressure of the case 11. That is, the vent 123 may maintain a closed state to seal the case 11 during normal operation of the electrode assembly 110. The vent 123 may be opened if the internal pressure of the case 11 rises above a certain value (e.g., a set value), such as due to overcharging, the occurrence of fire, or the like, and may discharge emissions, such as flames, gas, or the like, from the inside of the case 11 to the outside of the case 11.

In an embodiment, an insulating member may be installed between the electrode assembly 110 and the cap cover 12. Here, the insulating member may include first and second lower insulating members 171 and 172, and each of the first and second lower insulating members 171 and 172 may be installed between the electrode assembly 110 and the cap cover 12.

Further, according to an embodiment, an end of a separation member, which may be installed to face a side surface of electrode assembly 110, may be installed between the insulating member and the terminal 13. In an embodiment, the separation member may include first and second separation members 181 and 182.

Accordingly, ends of the first and second separation members 181 and 182 which may be installed to face side surfaces of the electrode assembly 110 may be installed between the first and second lower insulating members 171 and 172 and the positive and negative electrode terminals 13.

As a result, the terminals 13 joined to the positive and negative electrode current collectors 161 and 162 by welding or latching may be joined to ends of the first and second separation members 181 and 182 and the first and second lower insulating member 171 and 172.

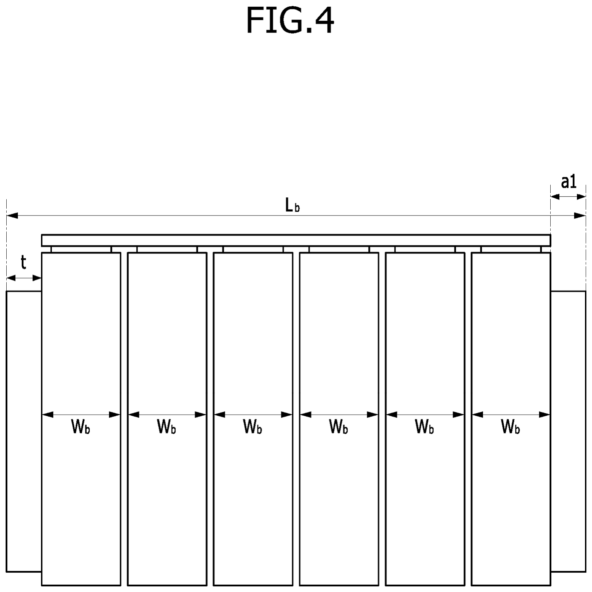

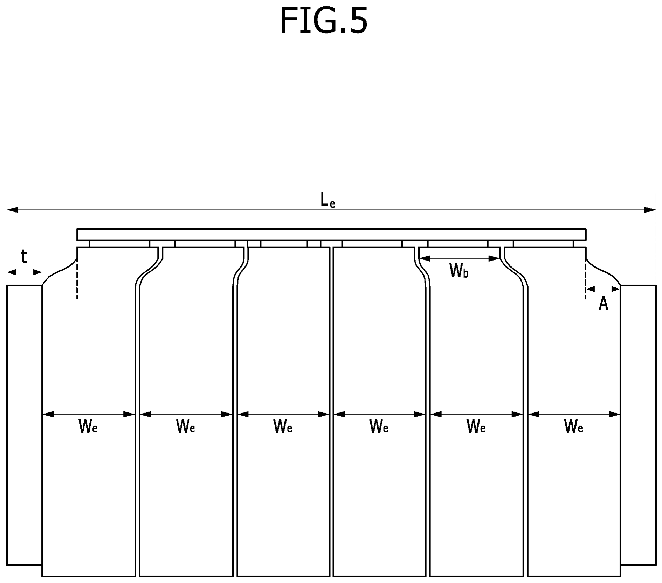

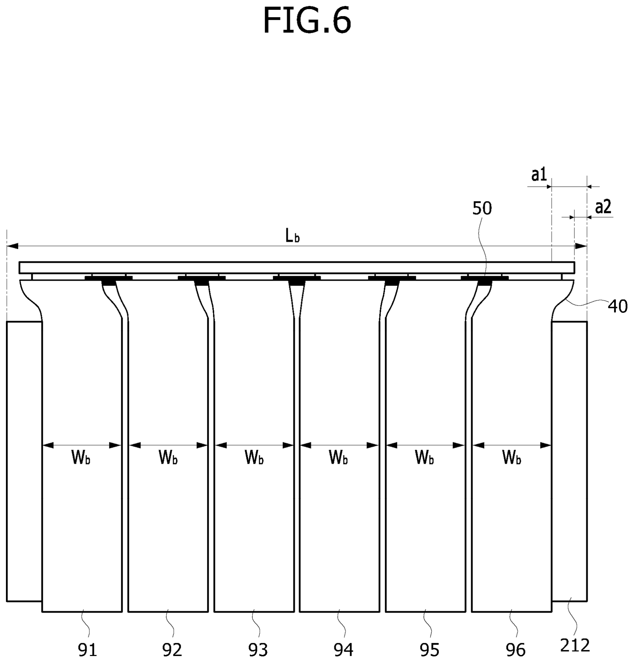

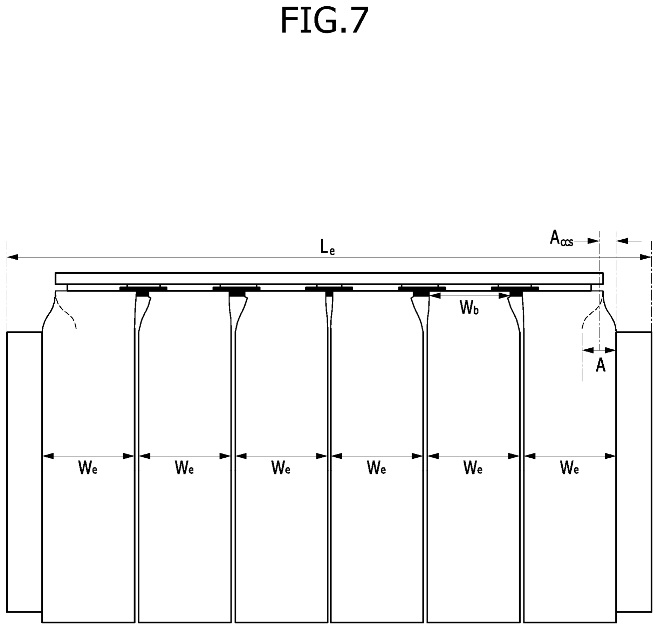

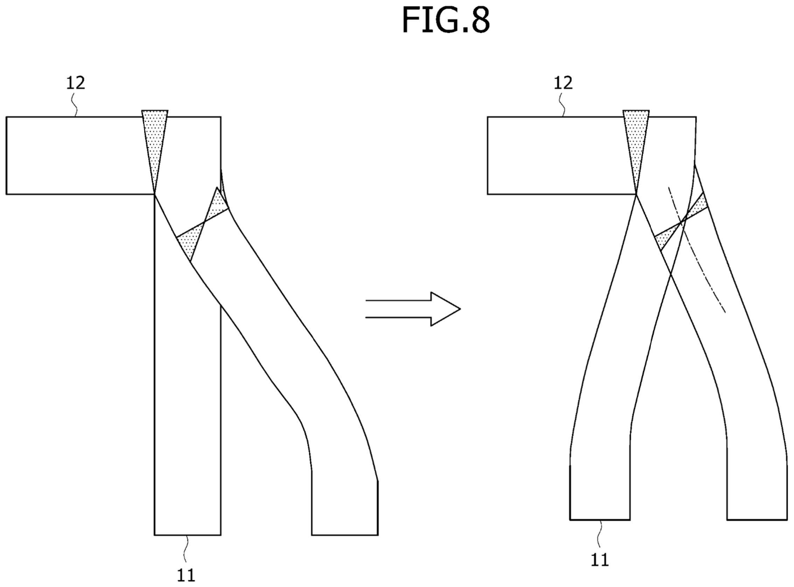

FIG. 4 is a view schematically showing a state in which a battery cell not provided with a fracture prevention part according to an embodiment of the present invention is disposed in a battery module; and FIG. 5 is a view schematically showing a state in which the battery cell of FIG. 4 is deformed by a swelling phenomenon. FIG. 6 is a view schematically showing a state in which a battery cell provided with a fracture prevention part according to an embodiment of the present invention is disposed in a battery module; and FIG. 7 is a view schematically showing a state in which the battery cell of FIG. 6 is deformed by a swelling phenomenon. FIG. 8 is a view schematically illustrating a deformation process of a case in which a fracture prevention part according to an embodiment of the present invention is formed. Referring to FIGS. 4 to 8, the fracture prevention part 40 may be formed on an upper portion of the case 11.

Definitions of the symbols shown in FIGS. 4 to 7 are as follows:

$W_b$ denotes the width of the cell at BOL (Beginning of Life);
$W_e$ denotes the width of the cell at EOL (End of Life);
A denotes the one-sided EOL swelling amount at the upper portion of the outermost cell;
$A_{ccs}$ denotes the value of A after application of the Cell Cap Spacer;
t denotes the width of the second body wall located at the outer side of the cell stack;
$L_b$ denotes the length of the module at BOL;
$L_e$ denotes the length of the module at EOL;
a1 denotes the distance between the outermost portion of the module and the upper portion of the outermost cell; and
a2 denotes the distance between the outermost portion of the module and the upper portion of the outermost cell after application of the Cell Cap Spacer.

In an embodiment, the long side surface 152 and the short side surface 153 of the case 11 are initially formed in a rectangular shape as shown in FIG. 4 and may undergo post-processing so as to protrude toward the second body wall 212 of the housing 20 to form the fracture prevention part 40. In an embodiment, the fracture prevention part 40 protruding toward the second body wall 212 may be formed in the process of integrally forming the case 11, thus minimizing the number of parts to be assembled.

A protruding length of the fracture prevention part 40 may increase from a central portion of the housing 20 toward an edge of the housing 20. For example, if six battery cells 10 are disposed inside the housing 20, the battery cells 10 may be sequentially referred to as a first cell 91 to a sixth cell 96. The first cell 91 and the sixth cell 96 may each be disposed as an outermost battery cell 10 and may be supported by the second body walls 212.

In an embodiment, the protruding length of the fracture prevention part 40 may be smaller than a length A by which the case 11 is deformable due to a swelling phenomenon.

If the fracture prevention part 40 is not formed on the case 11, the outer side of the case 11 is located at a first reference point a1. On the other hand, if the fracture prevention part 40 is formed on the case 11, the outer side of the case 11 may protrude from the first reference point a1 to a second reference point a2. In an embodiment, if the second reference point a2 corresponds to half of the deformable length A of the case 11 due to the swelling phenomenon, the fracture prevention part 40 may protrude in the opposite direction by a length corresponding to half of the deformable length A due to the swelling phenomenon later. Accordingly, excessive deformation of the case 11 may be suppressed, thereby preventing or substantially preventing destruction of the case 11. That is, the left drawing of FIG. 8 shows that the case 11 in which the fracture prevention part 40 is omitted is deformed by a set value due to stress. In addition, the right drawing of FIG. 8 shows a state in which the fracture prevention part 40 is formed on the upper portion of the case 11 and protrudes toward the housing 20 by half the set value, and is deformed by half the set value in the opposite direction of the housing 20 by stress.

The battery module 1 according to an embodiment of the present invention may further include spacers 50. The spacer 50 may be disposed between the battery cells 10 and may maintain a gap between the battery cells 10. The spacer 50 may be seated on the cap covers 12 of neighboring battery cells 10, and may be inserted between the cases 11 of the neighboring battery cells 10.

In an embodiment, the spacer 50 may be formed to include a resin material. The spacer 50 may have a space formed therein and may be damaged by an external force. The spacer 50 may be manufactured as an individual component or may be manufactured integrally with other components.

In an embodiment, the spacer 50 may be formed to include an elastic material. The spacer 50 may maintain a constant interval between the battery cells 10 even when contracted by an external force.

In an embodiment, a resin material and an elastic material may be used as the spacer 50. For example, the spacer 50 may be formed of a resin material, and an elastic material may be coated on a surface of the resin material, thus providing a hybrid-type structure to realize an efficient spacer 50.

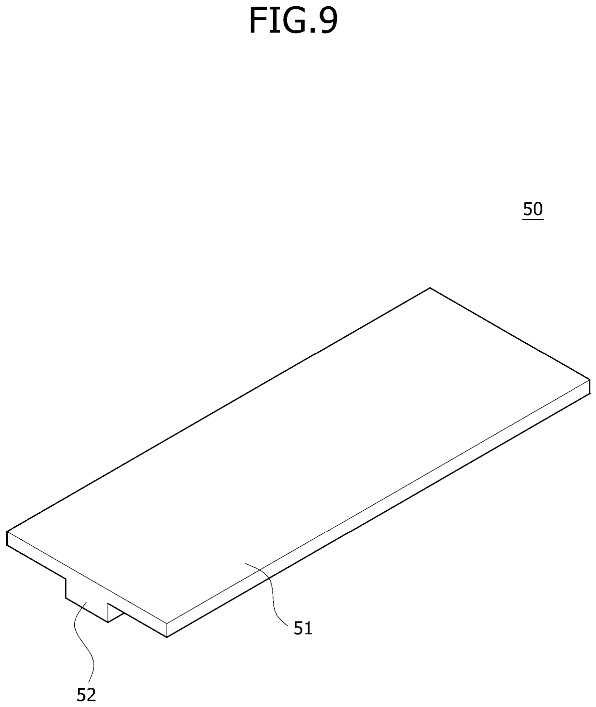

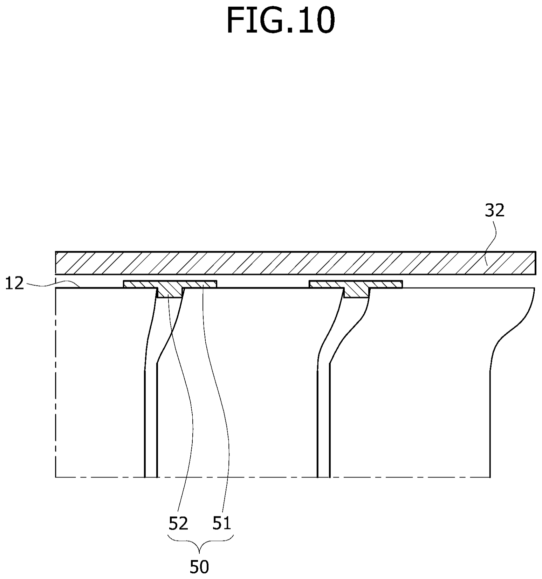

FIG. 9 is a perspective view schematically showing a spacer according to an embodiment of the present invention; and FIG. 10 is a view schematically illustrating a state in which the spacer of FIG. 9 is mounted between battery cells. Referring to FIGS. 6 to 10, the spacers 50 may be disposed between the battery cells 10 accommodated in a row. In an embodiment, the spacer 50 may include a cap seating portion 51 and a cap insertion portion 52.

The cap seating portion 51 may be seated on the upper side of the battery cell 10. The length of the cap seating portion 51 is longer than the distance between neighboring battery cells 10, such that the cap seating portion 51 may be seated on the cap cover 12. The cap seating portion 51 may be separated from the substrate 32 or may be integrally formed with the substrate 32.

The cap insertion portion 52 may extend from the cap seating portion 51 and may be inserted between the neighboring battery cells 10. The cap insertion portion 52 may prevent or substantially prevent damage caused by direct collisions between the neighboring battery cells 10. In an embodiment, a width of the cap insertion portion 52 may be proportional to a deformable length of the battery cell 10. For reference, Equations 1 and 2 are equations for setting the width of the cap insertion portion 52.

Equation 1

$$W_b \cdot n + G_i \cdot (n - 1) + 2A = W_b \cdot n + G_{ccs} \cdot (n - 1) + 2A_{ccs}$$

Equation 2

$$G_{ccs} = (2A / (n - 1)) \cdot (1 - k) + G_i, \text{ where, } k = A_{ccs} / A, (0 < k < 1)$$

Here, $W_b$ denotes the width of the cell at BOL (Beginning of Life);
n denotes the number of cells in the module;
$G_i$ denotes the initial upper gap between cells;
$G_{ccs}$ denotes the upper gap between cells after application of the Cell Cap Spacer;
A denotes the one-sided EOL swelling amount at the upper portion of the outermost cell;
$A_{ccs}$ denotes the value of A after application of the Cell Cap Spacer;
k denotes a design factor representing the ratio between $A_{ccs}$ and A.

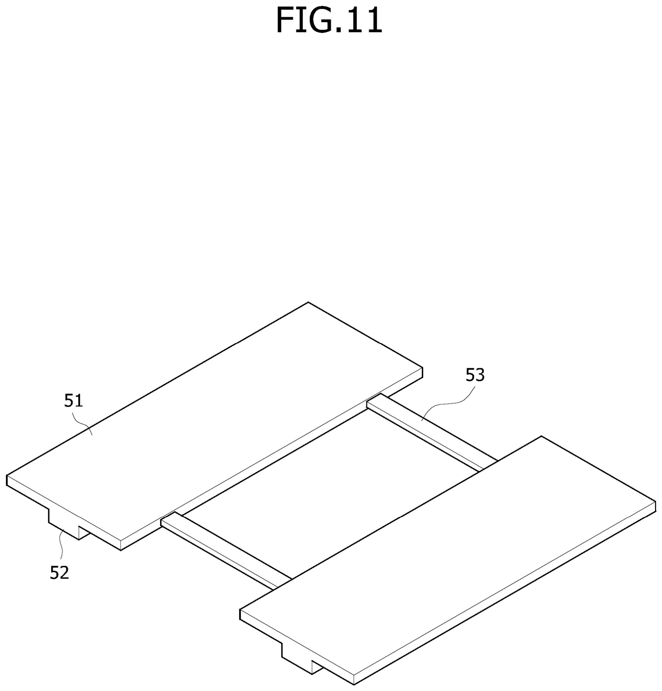

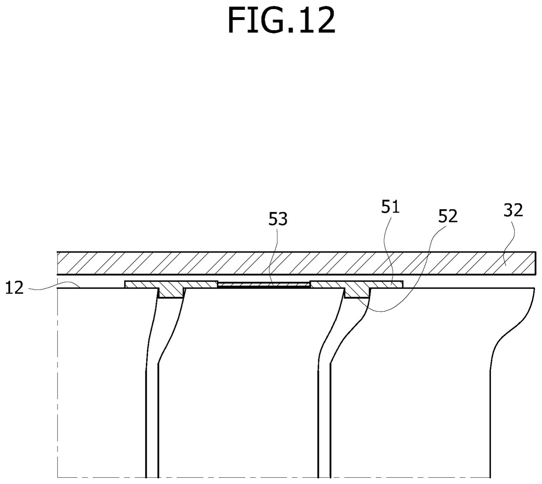

FIG. 11 is a perspective view schematically showing a spacer according to another embodiment of the present invention; and FIG. 12 is a view schematically illustrating a state in which the spacer of FIG. 11 is mounted between battery cells. Referring to FIGS. 11 and 12, the spacer 50 according to the present embodiment of the present invention may be integrally formed and disposed in each space between the neighboring battery cells 10. The spacer 50 may include a cap seating portion 51, a cap insertion portion 52, and a cap connection portion 53.

The cap seating portion 51 may be seated on the upper side of the battery cell 10. The length of the cap seating portion 51 is longer than the distance between the neighboring battery cells 10, such that the cap seating portion 51 may be seated on the cap cover 12. The cap seating portion 51 may be separated from the substrate 32 or may be integrally formed with the substrate 32.

The cap insertion portion 52 may extend from the cap seating portion 51 and may be inserted between the neighboring battery cells 10. The cap insertion portion 52 may prevent or substantially prevent damage caused by direct collisions between the neighboring battery cells 10.

The cap connection portion 53 may connect the cap seating portions 51. In an embodiment, the cap connection portion 53 may have a rod shape to connect the neighboring cap seating portions 51. In an embodiment, the cap seating portion 51 and the cap connection portion 53 may be distinguished by location as one component. That is, among a plate, a member seated on the cap cover 12 of the battery cell 10 may be the cap seating portion 51, and a member connecting the cap seating portions 51 may be the cap connection portion 53.

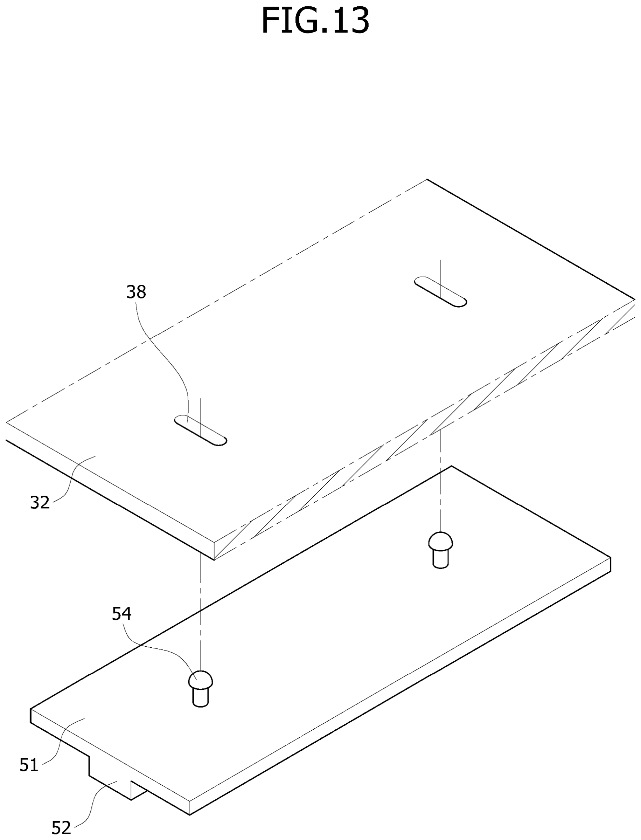

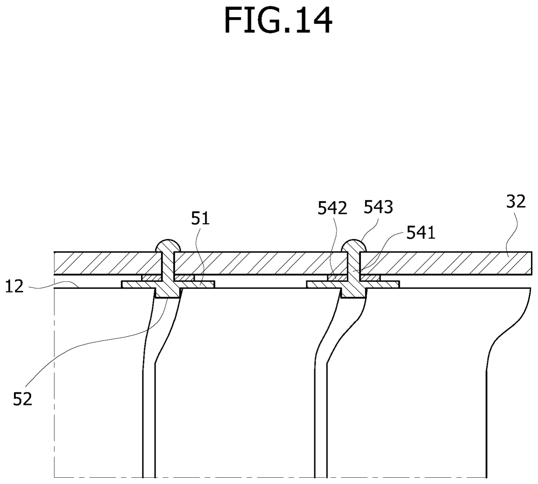

FIG. 13 is a perspective view schematically showing a spacer according to another embodiment of the present invention; and FIG. 14 is a view schematically illustrating a state in which the spacer of FIG. 13 is mounted between battery cells. Referring to FIGS. 13 and 14, the spacer 50 according to the present embodiment of the present invention may be connected to the connector 30. The spacer 50 may include a cap seating portion 51, a cap insertion portion 52, and a cap extension portion 54.

The cap seating portion 51 may be seated on the upper side of the battery cell 10. The length of the cap seating portion 51 is longer than the distance between the neighboring battery cells 10, such that the cap seating portion 51 may be seated on the cap cover 12.

The cap insertion portion 52 may extend from the cap seating portion 51 and may be inserted between the neighboring battery cells 10. The cap insertion portion 52 may prevent or substantially prevent damage caused by direct collisions between the neighboring battery cells 10.

The cap extension portion 54 may extend from the cap seating portion 51 and may be connected to the connector 30. The cap extension portion 54 may extend upward from the cap seating portion 51 and pass through the substrate 32 disposed above the cap cover 12. The cap extension portion 54 is movable along a guide hole 38 formed in the connector 30. The cap extension portion 54 may include a first extension portion 541. In an embodiment, the first extension portion 541 may be integrally formed with the cap seating portion 51 and may pass through the guide hole 38. The cap extension portion 54 may further include a second extension portion 542. The first extension portion 541 may pass through the second extension portion 542 and the second extension portion 542 may be disposed between the substrate 32 and the cap seating portion 51. The second extension portion 542 may limit vertical movement of the cap seating portion 51. The cap extension portion 54 may further include a third extension portion 543. The third extension portion 543 may be assembled to an upper end of the first extension portion 541 to prevent or substantially prevent the first extension portion 541 from being separated from the substrate 32.

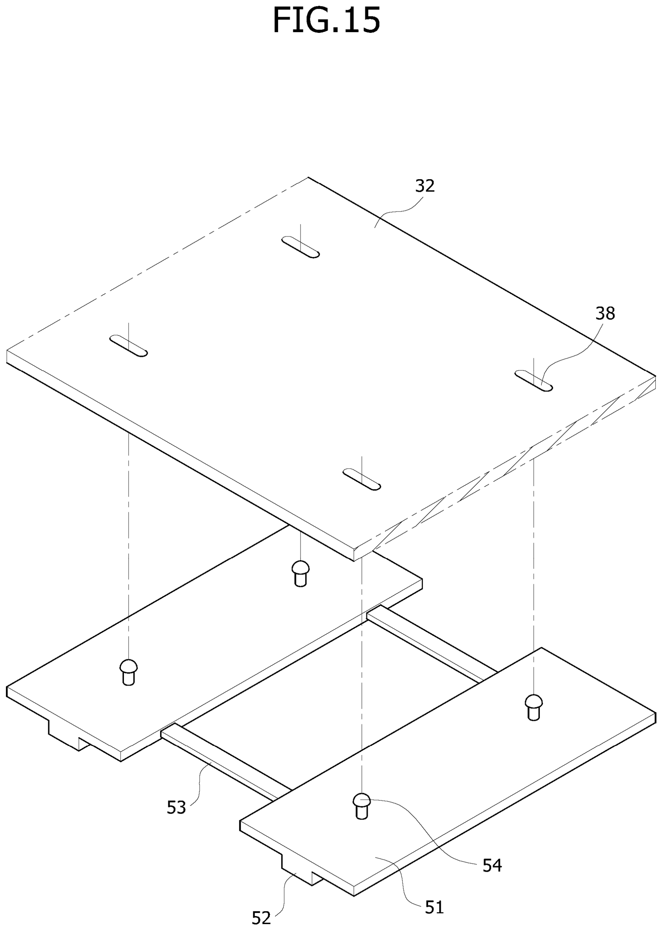

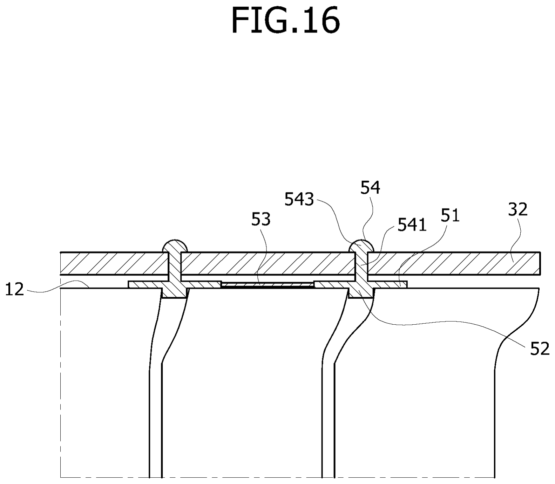

FIG. 15 is a perspective view schematically showing a spacer according to another embodiment of the present invention; and FIG. 16 is a view schematically illustrating a state in which the spacer of FIG. 15 is mounted between battery cells. Referring to FIGS. 15 and 16, the spacer 50 according to the present embodiment of the present invention may be integrally formed and connected to the connector 30. The spacer 50 may include a cap seating portion 51, a cap insertion portion 52, a cap connection portion 53, and a cap extension portion 54.

The cap seating portion 51 may be seated on the upper side of the battery cell 10. The length of the cap seating portion 51 is longer than the distance between the neighboring battery cells 10, such that the cap seating portion 51 may be seated on the cap cover 12.

The cap insertion portion 52 may extend from the cap seating portion 51 and may be inserted between the neighboring battery cells 10. The cap insertion portion 52 may prevent or substantially prevent damage caused by direct collisions between the neighboring battery cells 10.

The cap connection portion 53 may connect the cap seating portions 51. In an embodiment, the cap connection portion 53 may have a rod shape to connect the neighboring cap seating portions 51. In an embodiment, the cap seating portion 51 and the cap connection portion 53 may be distinguished by location as one component. That is, among a plate, a member seated on the cap cover 12 of the battery cell 10 may be the cap seating portion 51, and a member connecting the cap seating portions 51 may be the cap connection portion 53.

The cap extension portion 54 may extend from the cap seating portion 51 and may be connected to the connector 30. The cap extension portion 54 may extend upward from the cap seating portion 51 and pass through the substrate 32 disposed above the cap cover 12. The cap extension portion 54 is movable along a guide hole 38 formed in the connector 30. The cap extension portion 54 may include a first extension portion 541. In an embodiment, the first extension portion 541 may be integrally formed with the cap seating portion 51 and may pass through the guide hole 38. The cap extension portion 54 may further include a second extension portion 542. The first extension portion 541 may pass through the second extension portion 542 and the second extension portion 542 may be disposed between the substrate 32 and the cap seating portion 51. The second extension portion 542 may limit vertical movement of the cap seating portion 51. The cap extension portion 54 may further include a third extension portion 543. The third extension portion 543 may be assembled to an upper end of the first extension portion 541 to prevent or substantially prevent the first extension portion 541 from being separated from the substrate 32.

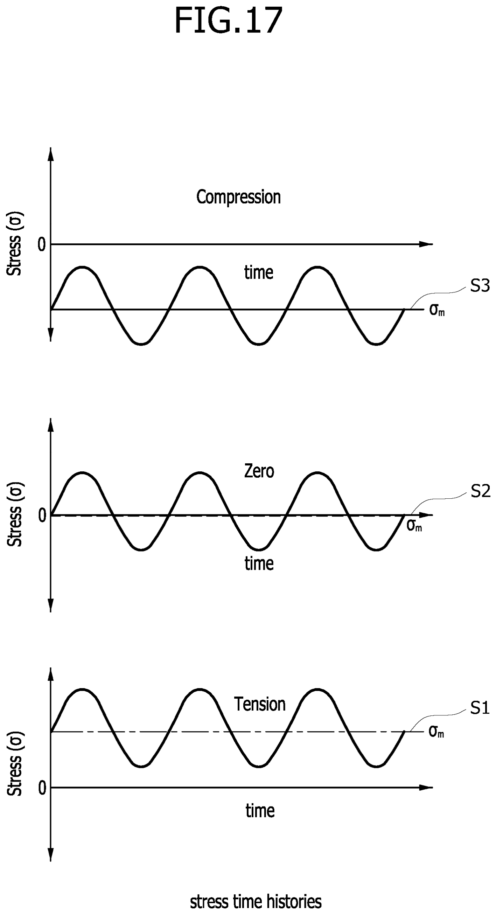

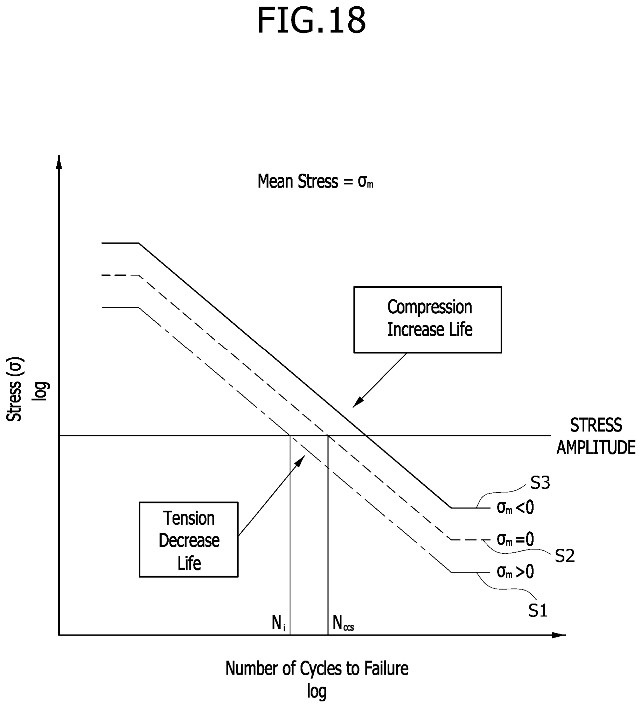

FIG. 17 is a graph schematically showing stress according to whether the fracture prevention part and the spacer according to an embodiment of the present invention are applied; and FIG. 18 is a graph schematically showing an expected life according to whether the fracture prevention part and the spacer according to an embodiment of the present invention are applied. Referring to FIGS. 17 and 18, according to mean stress effect theory, a battery cell 10 in which the fracture prevention part 40 and the spacer 50 are omitted corresponds to a first line S1. In addition, when the value k is 1/2, a battery cell 10 in which the fracture prevention part 40 and the spacer 50 are applied corresponds to a second line S2, and when the value k is less than 1/2, a battery cell 10 in which the fracture prevention part 40 and the spacer 50 are applied corresponds to a third line S3. As shown in the graphs, it can be seen that the life expectancy increases due to the application of the fracture prevention part 40 and the spacer 50 in a stress amplitude fatigue situation.

In the battery module 1 according to one or more embodiments of the present invention, the fracture prevention part 40 formed on the battery cell protrudes toward the housing 20, and the battery cell 10 is deformed in a direction opposite to the protruding direction of the fracture prevention part 40 due to a swelling phenomenon. Accordingly, excessive deformation of the battery cell 10 may be suppressed, and fatigue failure of the battery cell 10 itself may be prevented or substantially prevented.

In the battery module 1 according to one or more embodiments of the present invention, the spacer 50 is disposed between the battery cells 10. The spacer 50 may prevent or substantially prevent damage due to direct contact between the battery cells 10 deformed by a swelling phenomenon.

In a battery module according to one or more embodiments of the present invention, a fracture prevention part formed on a battery cell protrudes toward a housing. Due to a swelling phenomenon, the battery cell is deformed in a direction opposite to the protruding direction of the fracture prevention part. Accordingly, fatigue failure of the battery cell can be prevented or substantially prevented.

In a battery module according to one or more embodiments of the present invention, a spacer 50 is disposed between battery cells. The spacer 50 can prevent or substantially prevent damage due to direct contact between the battery cells deformed by a swelling phenomenon.

According to another aspect of the present disclosure, a battery module having an improved structure and a vehicle including the same are provided.

However, aspects and technical effects acquirable through the present disclosure are not limited to the above-described aspects and technical effects, and other aspects and technical effects which are not mentioned will be clearly understood by those skilled in the art from the description of the invention described below.

Although the present disclosure has been described with reference to some embodiments shown in the drawings, these are merely examples, and it is to be understood by those skilled in the art that various modifications are possible. Accordingly, the technical scope of the present disclosure should be defined by the claims.

## Claims

1. A battery module (1) comprising:

   battery cells (10);
   a housing (20) in which the battery cells (10) are accommodated in a row;
   a connector (30) electrically connected to the battery cells (10); and
   a fracture prevention part (40) on the battery cell (10) and protruding from the battery cell (10) to prevent fatigue failure due to a swelling phenomenon.

2. The battery module (1) as claimed in claim 1, wherein the battery cell (10) comprises:

   a case (11) having an open upper side and in which one or more electrode assemblies including a positive electrode (111) and a negative electrode (112) are accommodated;
   a cap cover (12) covering an open area of the case (11); and
   a terminal (13) assembled to the cap cover (12), connected to the electrode assembly (110), and connected to the connector (30).

3. The battery module (1) as claimed in claim 2, wherein the case (11) comprises:

   a rectangular lower surface (151);
   a pair of long side surfaces (152) extending upward from long sides of the lower surface (151) to face each other; and
   a pair of short side surfaces (153) extending upward from short sides of the lower surface (151) to face each other and connected to the pair of long side surfaces (152).

4. The battery module (1) as claimed in claim 2 or 3, wherein the fracture prevention part (40) is at an upper portion of the case (11).

5. The battery module (1) as claimed in claims 1 to 4, wherein the fracture prevention part (40) protrudes toward the housing (20).

6. The battery module (1) as claimed in claims 1 to 5, wherein a protruding length of the fracture prevention part (40) increases from a central portion of the housing (20) to an edge of the housing (20).

7. The battery module (1) as claimed in claims 1 to 6, further comprising a spacer (50) between the battery cells (10) to maintain a gap between the battery cells (10).

8. The battery module (1) as claimed in claim 7, wherein the spacer (50) is between a pair of neighboring battery cells (10) among the battery cells (10) accommodated in a row.

9. The battery module (1) as claimed in claim 7 or 8, wherein the spacer (50) comprises:

    a cap seating portion (51) seated on an upper side of the battery cell (10); and
    a cap insertion portion (52) extending from the cap seating portion (51) and inserted between the neighboring battery cells (10).

10. The battery module (1) as claimed in claims 7 to 9, wherein the spacer (50) is integrally formed and arranged between the neighboring battery cells (10).

11. The battery module (1) as claimed in claims 7 to 10, wherein the spacer (50) comprises:

    cap seating portions (51) seated on upper sides of the battery cells (10);
    a cap insertion portion (52) extending from the cap seating portion (51) and inserted between the neighboring battery cells (10); and
    a cap connection portion (53) connecting the cap seating portions (51).

12. The battery module (1) as claimed in claims 7 to 11, wherein the spacer (50) is connected to the connector (30).

13. The battery module (1) as claimed in claims 7 to 12, wherein the spacer (50) comprises:

    a cap seating portion (51) seated on an upper side of the battery cell (10);
    a cap insertion portion (52) extending from the cap seating portion (51) and inserted between the neighboring battery cells (10); and
    a cap extension portion (54) extending from the cap seating portion (51) and connected to the connector (30).

14. The battery module (1) as claimed in claims 7 to 13, wherein the spacer (50) is integrally connected to the connector (30).

15. The battery module (1) as claimed in claims 7 to 14, wherein the spacer (50) comprises:

    cap seating portions (51) seated on upper sides of the battery cells (10);
    a cap insertion portion (52) extending from the cap seating portion (51) and inserted between the neighboring battery cells (10);
    a cap connection portion (53) connecting the cap seating portions (51); and
    a cap extension portion (54) extending from the cap seating portion (51) and connected to the connector (30).

# FIG.1

# FIG.2

# FIG.3

# FIG.4

# FIG.5

# FIG.6

# FIG.7

FIG.8

# FIG.9

50

51

52

# FIG.10

# FIG.11

# FIG.12

# FIG.13

# FIG.14

# FIG.15

# FIG.16

# FIG.17

stress time histories

# FIG.18

Europäisches
Patentamt

European
Patent Office

Office européen
des brevets

# EUROPEAN SEARCH REPORT

Application Number

EP 25 21 3808

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/204399 A1 (SUZUKI SATOSHI [JP]) 14 July 2016 (2016-07-14) | 1-8 | INV. H01M50/209 |
| Y | * paragraphs [0013], [0026], [0030], [0039] - [0046]; figures 1,2,6,9 * | 7-15 | H01M50/242 H01M50/136 H01M50/103 |
| X | CN 221 057 596 U (NINGDE CONTEMPORARY AMPEREX TECH CO LTD) 31 May 2024 (2024-05-31) | 1-6 | H01M50/131 H01M50/291 |
| Y | * paragraphs [0005] - [0012], [0068] - [0087], [0093] - [0096]; figures 2-5 * | 7-15 | |
| Y | EP 3 136 495 A1 (SAMSUNG SDI CO LTD [KR]) 1 March 2017 (2017-03-01) * paragraphs [0007] - [0017]; figure 1 * | 7-15 | |
| Y | CN 220 731 650 U (AESC JAPAN CO LTD) 5 April 2024 (2024-04-05) * paragraphs [0003] - [0007], [0027] - [0030]; figures 1,5,8,11-14,25,26 * & EP 4 513 636 A1 (AESC JAPAN LTD [JP]) 26 February 2025 (2025-02-26) * paragraphs [0003], [0004], [0022] - [0026]; figures 1,5,8,11-14,25,26 * | 7-15 | |
| Y | JP 6 585726 B2 (HITACHI AUTOMOTIVE SYSTEMS LTD) 2 October 2019 (2019-10-02) * paragraphs [0007], [0008], [0039] - [0046]; figures 3-12 * | 7-15 | |

**TECHNICAL FIELDS SEARCHED (IPC)**

H01M

The present search report has been drawn up for all claims

| Place of search | Date of completion of the search | Examiner |
|---|---|---|
| The Hague | 12 March 2026 | Levecque, Pieter |

EPO FORM 1503 03.82 (P04C01)

## ANNEX TO THE EUROPEAN SEARCH REPORT
## ON EUROPEAN PATENT APPLICATION NO.

EP 25 21 3808

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2026

| Patent document cited in search report | | Publication date | Patent family member(s) | | Publication date |
|---|---|---|---|---|---|
| US 2016204399 | A1 | 14-07-2016 | CN | 105474431 A | 06-04-2016 |
| | | | DE | 112014003862 T5 | 02-06-2016 |
| | | | JP | 6152747 B2 | 28-06-2017 |
| | | | JP | 2015041484 A | 02-03-2015 |
| | | | US | 2016204399 A1 | 14-07-2016 |
| | | | WO | 2015025198 A1 | 26-02-2015 |
| CN 221057596 | U | 31-05-2024 | NONE | | |
| EP 3136495 | A1 | 01-03-2017 | CN | 106486623 A | 08-03-2017 |
| | | | CN | 115411430 A | 29-11-2022 |
| | | | EP | 3136495 A1 | 01-03-2017 |
| | | | KR | 20170025493 A | 08-03-2017 |
| | | | US | 2017062782 A1 | 02-03-2017 |
| CN 220731650 | U | 05-04-2024 | CN | 220731650 U | 05-04-2024 |
| | | | EP | 4513636 A1 | 26-02-2025 |
| | | | ES | 3050084 T3 | 19-12-2025 |
| | | | JP | 7766071 B2 | 07-11-2025 |
| | | | JP | 2025031455 A | 07-03-2025 |
| | | | US | 2025070340 A1 | 27-02-2025 |
| JP 6585726 | B2 | 02-10-2019 | JP | 6585726 B2 | 02-10-2019 |
| | | | JP | WO2017057207 A1 | 07-06-2018 |
| | | | WO | 2017057207 A1 | 06-04-2017 |

EPO FORM P0459

For more details about this annex : see Official Journal of the European Patent Office, No. 12/82